# EUROPEAN PATENT APPLICATION

(11) **EP 3 444 798 A1**
(43) Date of publication of application: **20.02.2019**
(21) Application number: 17186490.3
(22) Date of filing: 16.08.2017
(51) Int. Cl.: G09G 3/20, F16M 11/10

(54) **DISPLAY SYSTEM, METHOD AND COMPUTER PROGRAM FOR CONTROLLING AN ELECTRONIC DISPLAY**

(71) Applicant: Vestel Elektronik Sanayi ve Ticaret A.S., 45030 Manisa (TR)
(72) Inventor: KIRAZ,, Köksal, 45030 Manisa (TR)
(74) Representative: Flint, Adam

(57) **Abstract**

A display system (1) comprises a movable electronic display (4) for displaying visual content, a drive mechanism (10) mechanically coupled to the electronic display (4) for moving the electronic display, and a controller (6) for controlling the electronic display (4) and the drive mechanism (10). The controller (6) is configured to receive visual content to be displayed on the electronic display (4), determine an attribute of the visual content, control the drive mechanism (10) to move the electronic display (4) based on the determined attribute of the visual content, and control the electronic display (4) to display the visual content.

## Description

### Technical Field

The present disclosure relates to a display system, method and computer program for controlling an electronic display.

### Background

Electronic displays are becoming increasing prevalent. An electronic display is a device which can be controlled via electrical signals to display visual content. An example of an electronic display is a digital display screen. A digital display screen typically has a two-dimensional array of fixed and individually controllable picture elements (pixels). Examples of digital display screens include liquid crystal displays (LCDs), OLED (organic LED) or other LED displays, plasma displays etc. Such display screens are sometimes referred to as flat-panel displays, in contrast to traditional CRT (cathode ray tube) displays.

### Summary

According to a first aspect disclosed herein, there is provided a display system comprising: a movable electronic display for displaying visual content; a drive mechanism mechanically coupled to the electronic display for moving the electronic display; and a controller for controlling the electronic display and the drive mechanism. The controller is configured to receive visual content to be displayed on the electronic display, determine an attribute of the visual content, control the drive mechanism to move the electronic display based on the determined attribute of the visual content, and control the electronic display to display the visual content.

The display system is thus able to optimize itself autonomously for different types of visual content by physically moving the display as needed from a current position to a new position that is optimized for the determined attribute of the visual content, so that the visual content can be displayed by the display in the new position.

In embodiments, the electronic display may be rotatable and the controller may be configured to control the drive mechanism to rotate the electronic display based on the determined attribute of the visual content. For example, the determined attribute may be an orientation of the visual content and the controller may be configured to control the drive mechanism to rotate the electronic display to match the orientation of the visual content.

This allows the display system to optimally display both horizontally orientated - i.e. "landscape" - visual content, and vertically orientated - i.e. "portrait" - visual content, for example, by rotating the electronic display as needed between a horizontal orientation (to display portrait content) and a vertical orientation (to display landscape content).

It is noted however that, in general, the movement effected by the drive mechanism can be rotational, translational (in the geometric sense) or a combination of rotational and translational movement. In this respect, the term "position" as used herein covers location and orientation, individually and in combination, in the sense that the position of the electronic display can be changed via rotation of the display only, translation of the display only, or a combination of rotation and translation of the display.

The controller may be configured to compare a current orientation or location of the electronic display with the determined attribute of the visual content, and control the drive mechanism to move the electronic display to a new orientation or location based on the comparison.

The controller may be configured to determine the current orientation or location of the electronic display from display position data stored in a memory of the display system, and update the display position data to record the new orientation or location of the electronic display.

The controller may be configured to process the received visual content to determine the attribute of the visual content.

The controller may be configured to apply image processing to the received visual content to determine the attribute.

The controller may comprise a network interface configured to connect to a content-providing device to receive the visual content.

Other aspects of this disclose provide a corresponding method performed by a controller, and a computer program comprising executable code that is configured, when executed on a controller, to implement the steps of the method.

### Brief Description of the Drawings

To assist understanding of the present disclosure and to show how embodiments may be put into effect, reference is made by way of example to the accompanying drawings in which:
Figure 1 shows schematically an example of a display fixed in a vertical orientation displaying portrait and landscape content;
Figure 2 shows schematically an example of a rotatable display displaying portrait and landscape content;
Figure 3 shows a schematic block diagram for part of an example display system;
Figure 4 shows a flowchart for an example method of controlling an electronic display.

### Detailed Description

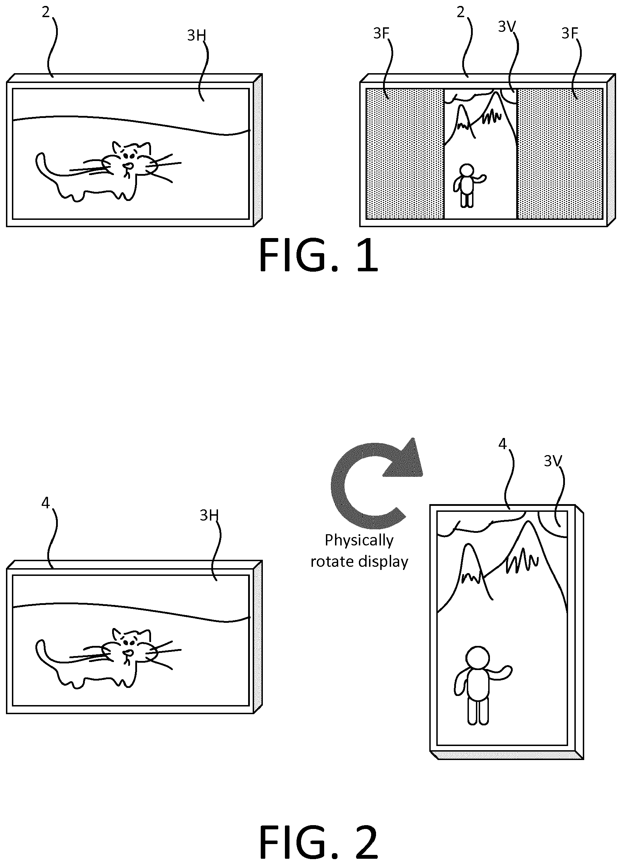

To provide context for the described embodiments, Figure 1 shows an example of an electronic display in the form of a screen 2 fixed in a horizontal orientation. The left-hand side of Figure 1 shows how, in this horizontal orientation, the screen 2 is optimized for displaying horizontally-oriented (landscape) content 3H; that is, visual content that is wider that it is tall. However, in order for the horizontally-orientated screen 2 to display vertically-oriented (portrait) content 3V - that is, visual content that is taller than it is wide - at the correct orientation, compromises need to be made. This can for example involve one or more of: cropping the portrait content 3V such that part of it is not displayed, displaying a scaled-down version of the content 3V with additional "filler" content 3F, e.g. in the form of so-called "black bars", which wastes a significant portion of the available display area (as illustrated on the righthand side of Figure 1), "stretching" the portrait content 3V to change its aspect ratio, or otherwise distorting the portrait content 3V. The same considerations apply to a screen fixed in a vertical orientation with respect to landscape content.

To address such issues, Figure 2 shows how a movable screen 4 may be provided which, in this example, can be rotated about a horizontal axis as needed to either a horizontal orientation in order to display landscape content optimally (left-hand side) or a vertical orientation in order to display portrait content optimally (righthand side). In this manner, both portrait and landscape content can be rendered on the screen 4 without any defects in resolution, size or aspect ratio. The screen 4 can for example be a flat-panel display screen. For example, the screen 4 may be an OLED or other LED screen, LCD screen, plasma screen etc.

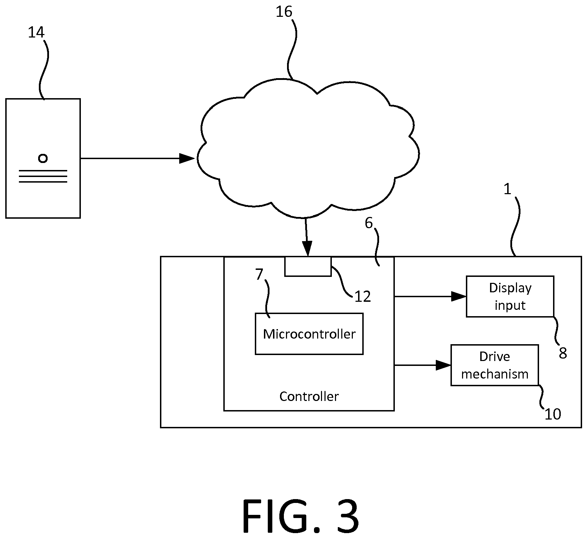

The movable display screen 4 forms part of an example autonomous display system 1 and Figure 3 shows a schematic block diagram in which additional components of the autonomous display system 1 are shown. In addition to the movable screen 4 (not shown in Figure 3), the display system 1 comprises a controller 6 and a drive mechanism 10. The drive mechanism 10 is mechanically coupled to the screen 4 to allow it to move (e.g. rotate) the display screen 4. The controller 6 has a video output connected to a video input 8 of the movable display screen 4, and a control output connected to a control input of the drive mechanism 10 so that it can control the drive mechanism 10 to move the screen 4. The controller 6 controls the drive mechanism 10 by generating a control signal at the drive mechanism's control input.

The controller 6 can for example comprise a microcontroller, CPU and/or other processor or processing system or circuitry configured to carry out the functions of the controller 6 described herein. In the example of Figure 3, the controller 6 is shown to comprise a microcontroller 7, which can for example be provided on a video control board of the controller 6 (not shown). However, other hardware architectures for the controller 6 are equally viable, some examples of which are described later.

The controller 6 receives visual content, processes the received content to determine an attribute thereof, and provides the visual content to the screen 4 for displaying via the screen's video input 8. It also selectively controls the drive mechanism 10 to move the screen 4 autonomously, based on the determine attribute of the visual content, as described later.

The video input 8 can for example take the form of an HDMI input (High-Definition Multimedia Interface), SCART input (from Syndicat des Constructeurs d'Appareils Radiorécepteurs et Téléviseurs - Radio and Television Receiver Manufacturers' Association), AV (Audio/Video) input, or other cable-based input suitable for receiving visual content to be displayed, or the video input 8 could be provided by a wireless interface, e.g. based on Wi-Fi, Bluetooth or other wireless communication technology. However the video input 8 is implemented, the controller 6 is able to provide visual content to the screen 4 via the video input 8 to cause the visual content to be displayed on the screen 4. Depending on the implementation, the controller 6 may process the visual content, e.g. to decode encoded video content, before it is displayed, though this may not be necessary depending on the type and format of the content.

A piece of visual content can take the form of a video image (pre-recorded or live, such as a "live feed"), a slide or set of slides, a picture (images) or set of images, graphics (animated or static; 2D or 3D etc.), database content, etc.

The drive mechanism 10 is mechanically coupled to the display screen 4 in a manner that allows it to move the display screen 4 according to control signals generated by the controller 6. Accordingly, the controller 6 can effect desired movement of the screen 4 by generating and outputting a suitable control signal to the drive mechanism 10. The drive mechanism 10 can for example comprise a motor or system of motors, which allow it to convert electrical energy into kinetic energy in order to effect the movement of the screen 4.

Although not shown in the Figures, the movable screen 4 can for example be mounted (or otherwise supported) on a movable mount (or other movable support structure), which is movable in the sense that it permits movement of the screen 4 by the drive mechanism 10 (rotation of the screen 4 between the vertical and horizontal orientation in this particular example). In this case, the drive mechanism 10 can be mechanically coupled to the support structure (and hence to the screen 4) so that it can move (e.g. rotate) the screen 4 by moving (e.g. rotating) the support structure. For example, the drive mechanism 10 can take the form of a motorized panel (engine panel) to which the screen 4 can be attached.

Returning to Figure 3, the controller 6 is shown in this example to comprise a content interface 12 for receiving the visual content to be displayed on the screen 4. The content interface 12 is a network interface in this example, which allows the controller 6 to receive visual content from a content server 14 (or other content-providing device) via a network 16. The network 16 can for example be the Internet, or a local network, or any other form of network formed of wired and/or wireless connection(s) that can deliver visual content to the controller 12. In the examples described below, the visual content is received via a network cable (e.g. Ethernet cable) connected to the controller 6. This may have certain benefits in terms of reliability and bandwidth, though the use of a wireless connection to receive the content is not excluded. Other sources of the visual content are possible, including for example a DVD or local storage device (e.g. hard-drive).

One application for the described display system 1 is to provide "digital signage". Digital signage is a rapidly growing communications medium that offers a wide range of ways to engage with users, by using electronic displays to provide information (typically in public or semi-public areas) that would have been traditionally provided by traditional static signs, billboards, banners, murals, sandwich boards, etc. Digital signage is increasingly being adopted in venues such as hotels, airports, train stations, subways, schools, restaurants, and other environments, both indoor and outdoor. It is expected that displays will continue to evolve, becoming thinner, lighter, more flexible and more energy efficient, making digital signage an increasing viable option in many contexts.

The display system 1 can for example be embodied in a display device, such as a standalone device in which the movable screen 4, the controller 6 and the drive mechanism 10 are integrated (e.g. a digital signage device).

An example control flow that provides optimal display of visual content will now be described.

Pieces of visual content to be displayed in turn are provided by the content server 14 to the controller 6, where each piece of visual content could have a portrait or a landscape orientation. In one example, each piece of visual content is processed by the controller 6 to determine at least one attribute of that piece of visual content, which in this example is the content's orientation (determines as portrait or landscape, i.e. as an attribute that is binary in the sense that it has only two possible values).

For each piece of visual content, when the time comes to display that piece of content, the controller 6 controls the drive mechanism 10 to move the screen 4 to an optimal position for that piece of content if necessary (i.e. if the screen 4 is not already at the optimal position for that piece of content).

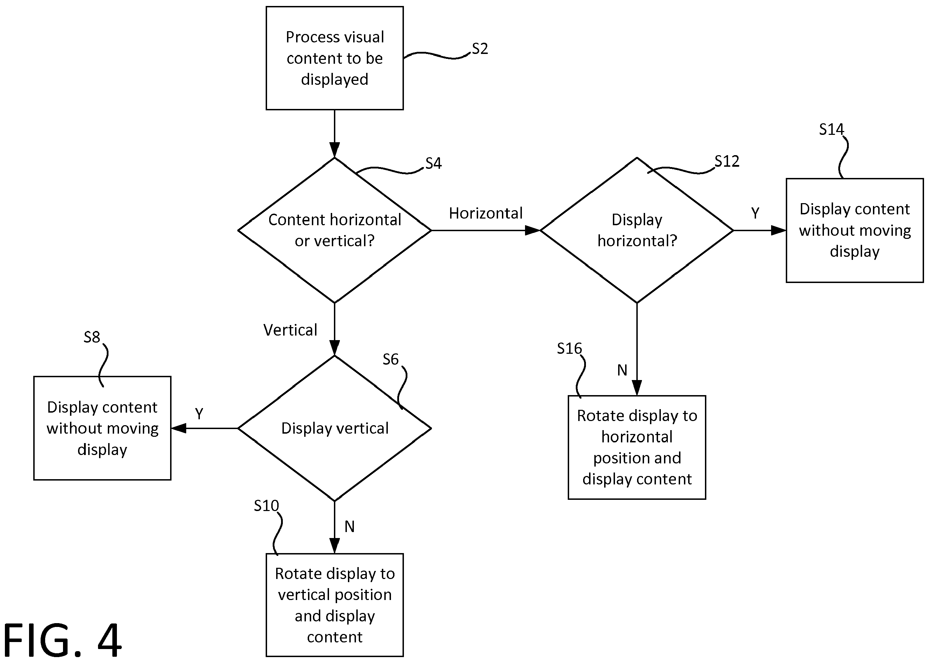

Figure 4 shows a flowchart for an example method implemented by the controller 6. The method can for example be implemented as a software algorithm executed on the microcontroller 7 or other processor of the controller 6. The steps of Figure 4 are applied to each piece of visual content to be displayed. Although the method is described in the context of screen rotation only, it can also be applied to other forms of screen movement.

At step S2, the piece of visual content is processed to (in this example) determine its orientation as either vertical or horizontal (S4).

The controller 6 also determines the current orientation of the screen 4. To allow this determination to be made efficiently, the controller 6 maintains display position data in a memory of the display system 1, in the form of one or more memory devices (not shown), which it updates whenever the position of the screen 4 is changed. This allows the current position of the screen 4 to be determined from the screen positon data.

Additionally or alternatively, one or more sensors may determine the current position of the screen 4. This may be useful in case the screen position has been changed manually.

The controller 6 then compares the current orientation of the screen 4 with the orientation of the piece of visual content to be displayed. If both the screen 4 and the content are vertically orientated (S6, "Y" branch), then the content is displayed on the vertically-orientated screen 4 without rotating the screen (S8). However, if the content is vertically-orientated but the screen 4 is currently horizontally-orientated (S6, "N" branch), then the controller 6 rotates the screen 4 to a vertical orientation and displays the content on the vertically-orientated screen (S10). The controller also updates the display position data to record the new screen position. Likewise, if both the screen 4 and the content are horizontally-orientated (S12, "Y" branch), then the content is displayed on the horizontally-orientated screen 4 without rotating the screen 4 (S 14). However, if the content is horizontally-orientated but the screen 4 is currently vertically-orientated (S12, "N" branch), then the controller 6 rotates the screen 4 to a horizontal orientation and displays the content on the horizontally-orientated screen (S16). The controller also updates the display position data to record the new screen position.

In circumstances where the screen is moved (e.g. rotated, as at step S10 or S14), the controller 6 may wait until the screen 4 has been moved (e.g. rotated) to its optimal position before beginning to display the visual content, or it may begin displaying the visual content before or as the screen 4 is being moved such that the visual content will already have been displayed for an interval of time when the screen reaches the optimal position.

In this example, the controller 6 itself processes the visual content to determine the attribute of the visual content (for example, by applying image processing to the visual content). Where the visual content is received in an encoded form, this processing can for example be applied after the video has been decoded for displaying. An advantage of determining the attribute of the visual content locally, i.e. at the controller 6, via local processing of the visual content, is that does not require any special content preparation on the server side, or any additional metadata to be applied to or otherwise provided with the visual content. This means the display system 1 is able to display any desired visual content optimally, without requiring any adaptation of the content server 14, which in turn allows the described display system to be used in conjunction with existing content servers and/or other existing content-providing infrastructure (e.g. of the kind already used in conventional digital signage applications).

In another example, metadata or a flag or the like indicating the content's orientation (or other attribute) may be received with the content, from which the controller 6 determines the attribute.

The determined attribute in the above examples is the orientation of the visual content, which is determined as portrait (horizontal) or landscape (vertical), though the present techniques can also be adapted to other forms of content attribute, for example more complex attributes that can take more than two values. Moreover, as indicated above, in other examples the physical location of the display can be changed based on the determined attribute, in addition or as an alternative to rotation.

It will be understood that the processor or processing system or circuitry of the controller 6 may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to a memory for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A display system comprising:
a movable electronic display for displaying visual content;
a drive mechanism mechanically coupled to the electronic display for moving the electronic display; and
a controller for controlling the electronic display and the drive mechanism;
wherein the controller is configured to receive visual content to be displayed on the electronic display, determine an attribute of the visual content, control the drive mechanism to move the electronic display based on the determined attribute of the visual content, and control the electronic display to display the visual content.

2. The display system of claim 1, wherein the electronic display is rotatable, wherein the controller is configured to control the drive mechanism to rotate the electronic display based on the determined attribute of the visual content.

3. The display system of claim 2, wherein the determined attribute is an orientation of the visual content and the controller is configured to control the drive mechanism to rotate the electronic display to match the orientation of the visual content.

4. The display system of any of claims 1 to 3, wherein the controller is configured to compare a current orientation or location of the electronic display with the determined attribute of the visual content, and control the drive mechanism to move the electronic display to a new orientation or location based on the comparison.

5. The display system of claim 4, wherein the controller is configured to determine the current orientation or location of the electronic display from display position data stored in a memory of the display system, and update the display position data to record the new orientation or location of the electronic display.

6. The display system of any of the preceding claims, wherein the controller is configured to process the received visual content to determine the attribute of the visual content.

7. The display system of claim 6, wherein the controller is configured to apply image processing to the received visual content to determine the attribute.

8. The display system of any of the preceding claims, wherein the controller comprises a network interface configured to connect to a content-providing device to receive the visual content.

9. A method of controlling an electronic display, the method comprising implementing, by a controller, the following steps:
receiving visual content to be displayed on the electronic display;
determining an attribute of the visual content;
controlling a drive mechanism mechanically coupled to the electronic display to move the electronic display based on the determined attribute of the visual content; and
controlling the electronic display to display the visual content.

10. The method of claim 9, wherein the controlling step comprises controlling the drive mechanism to rotate the electronic display based on the determined attribute of the visual content.

11. The display system of claim 10, wherein the determined attribute is an orientation of the visual content and the controlling step comprises controlling the drive mechanism to rotate the electronic display to match the orientation of the visual content.

12. The display system of any of claims 9 to 11, comprising a step of comparing a current orientation or location of the electronic display with the determined attribute of the visual content, wherein the controlling step comprises controlling the drive mechanism to move the electronic display to a new orientation or location based on the comparison.

13. The display system of claim 12, wherein the current orientation or location of the electronic display is determined from display position data stored in a memory, and the method comprises a step of updating the display position data to record the new orientation or location of the electronic display.

14. The display system of any of claims 9 to 13, comprising a step of processing the received visual content to determine the attribute of the visual content.

15. A computer program comprising executable code that is configured, when executed on a controller, to implement the steps of any of claims 9 to 14.
